Europäisches Patentamt

European Patent Office

Office européen des brevets

(11) Veröffentlichungsnummer : **0 433 317 B1**

(19)

(12) **EUROPÄISCHE PATENTSCHRIFT**

(45) Veröffentlichungstag der Patentschrift :
**13.05.92 Patentblatt 92/20**

(21) Anmeldenummer : **89909713.3**

(22) Anmeldetag : **07.09.89**

(86) Internationale Anmeldenummer :
**PCT/DE89/00583**

(87) Internationale Veröffentlichungsnummer :
**WO 90/02666 22.03.90 Gazette 90/07**

(51) Int. Cl.⁵ : **B60N 2/28**

(54) **KINDERSICHERHEITSSITZ.**

(30) Priorität : **07.09.88 DE 8811329 U**

(43) Veröffentlichungstag der Anmeldung :
**26.06.91 Patentblatt 91/26**

(45) Bekanntmachung des Hinweises auf die
Patenterteilung :
**13.05.92 Patentblatt 92/20**

(84) Benannte Vertragsstaaten :
**AT BE CH DE FR GB IT LI LU NL SE**

(56) Entgegenhaltungen :
**FR-A- 2 391 683**
**FR-A- 2 553 985**
**US-A- 3 645 548**
**US-A- 4 058 342**

(73) Patentinhaber : **Curt Würstl**
**Vermögensverwaltungs GmbH & Co. KG**
**Schaumbergstrasse 8**
**W-8670 Hof (DE)**

(72) Erfinder : **QUERFURTH, Winfried**
**Gartenstra e 28**
**W-8646 Nordhalben (DE)**

## Beschreibung

Die Erfindung betrifft einen Kindersicherheitssitz nach dem Gattungsbegriff von Anspruch 1.

Ein Kindersicherheitssitz dieser Art ist durch die FR-A-2 553 985 bekannt. Bei diesem bekannten Sitz führt zwar ebenfalls die obere Hinterkante des Schalensitzes beim Verschwenken des Sitzes eine etwa senkrecht bzw. annähernd entlang der Rückenlehne eines Kraftfahrzeugsitzes verlaufende Bewegung aus. Der Sitz wird aber, soweit ersichtlich, lediglich mit seiner Auflage auf den Kraftfahrzeugsitz gestellt, ohne dort gegen Verrutschen oder Verkippen gesichert zu sein.

Der vorliegenden Erfindung liegt die Aufgabe zugrunde, einen Kindersitz der vorstehenden Art so weiterzubilden, daß er gegen Verrutschen auf seiner Auflage und/oder gegen Verkippen gesichert ist und daß trotzdem ein Verbringen des Sitzes aus einer Sitz- in eine Liegeposition und umgekehrt in einfacher Weise möglich ist.

Gemäß der Erfindung wird diese Aufgabe durch die im Kennzeichen von Anspruch 1 angegebenen Merkmale gelöst. Durch diese Ausbildung wird erreicht, daß der Schalensitz in jeder Betriebslage mit der Rückenlehne sauber an der Rückenlehne des Kraftfahrzeuges anliegt.

Die Befestigung des Kindersitzes am Kraftfahrzeugsitz mittels der Gurte des Kraftfahrzeugsitzes ist als solche bereits aus der US-A-3 645 548 bekannt.

Gemäß einer besonders bevorzugten Ausgestaltung ist der Betätigungsmechanismus in den Schalensitz integriert. Als zweckmäßig hat es sich erwiesen, wenn der Schalensitz an seiner Unterseite oder vorzugsweise, wenn die Auflage an ihrer Oberseite zumindest eine, vorzugsweise zwei, im wesentlichen ebene Gleitflächen enthält, die in der Verschieberichtung verlaufen und längs derer der Schalensitz verschiebbar ist. Die Auflage ist zu diesem Zwecke vorzugsweise als eine auf den Sitzbereich eines Kraftfahrzeugsitzes aufstellbare Plattform ausgebildet, die auf ihrer Oberfläche ebene Bereiche oder Führungen enthält oder sie wird von einem Rahmengestell gebildet, das zwei im festen Abstand voneinander gehaltene Längs- und Laufschienen enthält. Die Auflage hält den Schalensitz derart fest, daß er gegenüber derselben längsverschieblich bleibt, jedoch nicht nach oben abgehoben werden kann. Zu diesem Zweck ist an der Unterseite des Schalensitzes bzw. an der Oberseite der Auflage jeweils beabstandet von denselben zumindest ein im wesentlichen in Richtung der Längsverschiebung verlaufender Bügel angeordnet, unter dem ein an der Auflage bzw. an dem Schalensitz befestigtes Halteelement derart hindurchgreift, daß der Bügel auch die Endlagen für die Vor- und Rückverschiebung des Schalensitzes festlegen kann.

Gemäß einer besonders bevorzugten Ausgestaltung der Erfindung ist der zumindest eine erste Hebel am seitlichen Randbereich der Auflage angelenkt. Zweckmäßigerweise ist dabei an beiden Seiten der Auflage je ein Hebel angebracht, von denen zumindest einer in Wirkverbindung mit dem Betätigungsmechanismus steht, wobei die Hebel mit Vorteil symmetrisch zur Längsmittelebene des Schalensitzes angeordnet sind. Vorzugsweise sind dabei die beiden Hebel von einem U-förmigen Bügel gebildet, dessen freie Schenkel an dem Schalensitz drehbar angelenkt sind, wobei der Bügel im Bereich des die freien Enden verbindenden Teiles im wesentlichen parallel zu rückwärtigen Kante der Auflage sowie längs derselben schwenkbar gelagert ist. Dies geschieht vorzugsweise durch zwei gegeneinander gestellte L-förmig abstehende Befestigungsglieder mit vorstehenden Nasen, welche den die U-Schenkel verbindenden Bereich des Bügels zumindest in einem Längsstück erfassen. Wenn die L-förmig abstehenden Glieder mit den einander zugekehrten Nasen auf elastisch verformbarem Material gefertigt sind, kann der Bügel durch eine temporäre Verformung in seine Betriebslage gebracht werden, in die er einschnappt.

Die Überführung des Kindersicherheitssitzes aus der Sitz- in die Liegeposition und umgekehrt erfolgt in einem einfachen Bewegungsablauf. Hierzu ist die Unterseite des Schalensitzes im rückwärtigen Bereich nach oben abgebogen. Mit anderen Worten, die ebene Unterseite und die im wesentlichen ebene Rückenlehne des Schalensitzes stoßen nicht direkt im vorgewählten Winkel aneinander, sondern sind durch einen abgeschrägten Bereich miteinander verbunden, der bei Einnahme der Schlafstellung parallel zu der Auflagenoberseite verläuft, während dann, wenn der Kindersicherheitssitz die Sitzlage einnimmt, der vordere Bereich des Schalensitzes, der die ebene Unterseite desselben bildet, parallel zur Auflagenoberseite verläuft.

Der für die Verstellung benötigte Kraftaufwand läßt sich reduzieren, wenn an der Oberseite der Auflage oder vorzugsweise an der Unterseite des Schalensitzes zumindest eine Rolle vorgesehen ist, über welche sich der Schalensitz an der Auflage abstützt, wobei die zumindest eine Rolle vor der Anlenkstelle des ersten Hebels an der Auflage angeordnet ist. Diese Ausgestaltung ermöglicht es des weiteren, die Fertigungstoleranzen in den Einzelteilen des Kindersicherheitssitzes geringer zu halten, als dies bei einer reinen Gleitführung möglich wäre. Die zumindest eine Rolle ist bevorzugt an der Unterseite des Schalensitzes im Bereich der vorderen Abbiegung desselben angeordnet, und zwar derart, daß der vordere Bereich des Schalensitzes mit seiner Unterseite fast auf der Auflage aufliegt, wenn der Kindersicherheitssitz seine Sitzstellung einnimmt. In der bevorzugten Ausgestaltung dieses Konstruktionsdetails ist an der Unterseite des Schalensitzes an den Enden einer quer zur Sitzmittelebene verlaufenden Achse je eine Rolle vorgesehen, wobei die Achse unter dem Bügel verläuft, so daß sie gleichzeitig die Lagen der Endverschiebung begrenzt und verhindert, daß der Schalensitz, insbesondere im Falle eines Unfalls, von der im Kraftfahrzeug gehaltenen Auflage abgehoben wird.

Gemäß einer besonders bevorzugten Ausgestaltung der Erfindung ist der erste Hebel als einarmiger Hebel ausgebildet.

Gemäß einer ersten, besonders bevorzugten Variante des Verstellmechanismus enthält dieser einen zweiten Hebel, dessen eines Ende gelenkig am ersten Hebel befestigt ist, und dessen anderes Ende in Eingriff mit einem um eine Drehachse verschwenkbaren Exzenter steht. Der Anlenkpunkt des zweiten Hebels am ersten Hebel erfolgt bevorzugt benachbart zu dessen Anlenkpunkt an dem Schalensitz, und zwar zwischen diesem Anlenkpunkt des ersten Hebels am Schalensitz und dessen Anlenkpunkt an der Auflage. Der bestand, den der Anlenkpunkt des zweiten Hebels am ersten Hebel vom Anlenkpunkt des ersten Hebels am Schalensitz aufweist, beträgt vorzugsweise 1/10 bis 1/9 des Abstandes der Anlenkpunkte des ersten Hebels am Schalensitz und an der Auflage. Damit das Hebelgestänge den Bewegungsablauf nicht stört und um eine einfache Befestigungsmöglichkeit für den zweiten Hebel zu erhalten, ist der Anlenkpunkt des zweiten Hebels am ersten Hebel vorzugsweise seitlich zu der die Anlenkpunkte des ersten Hebels verbindenden Geraden versetzt.

Das in Eingriff mit dem Exzenter stehende Ende des zweiten Hebels ist zweckmäßigerweise in einer Längsführung zwangsgeführt, welche radial zum Drehpunkt des Exzenters verläuft. Durch diese Maßnahme und durch geeignete Wahl der Länge der Hebel, der Lage des Anlenkpunktes des zweiten Hebels am ersten Hebel, sowie des Verlaufs des Exzenters wird erreicht, daß die Drehachse des Exzenters und die beiden Anlenkpunkte des zweiten Hebels zumindest in den beiden Endstellungen in einer Geraden liegen, was in diesen Endlagen bewirkt, daß eine Selbsthemmung entsteht, die einer unbeabsichtigten Verstellung des Kindersicherheitssitzes entgegenwirkt.

Der Exzenter ist vorzugsweise von einer Exzenterscheibe mit einem Führungsschlitz gebildet, in welchem ein Drehzapfen geführt ist, der den einen Anlenkpunkt des zweiten Hebels bildet, und in der Längsführung zwangsgeführt ist.

Als günstig hat es sich erwiesen, ein Handrad oder einen Betätigungshebel direkt mit der Drehachse des Exzenters zu verbinden, dort wo diese aus der Seitenwandung des Schalensitzes austritt, was für die Verstellung des Kindersicherheitssitzes zwischen seiner Ruhe- und seiner Schlafstellung eine Einhandbedienung ermöglient.

Gemäß einer zweiten zweckmäßigen Variante enthält der Verstellmechanismus eine an dem ersten Hebel drehbar angelenkte Hülse, welche über ein Innengewinde einen mit einem Außengewinde versehenen Bereich einer Einstellspindel aufnimmt. Die Hülse ist mit Vorteil um eine senkrecht zu ihrer Längsachse verlaufende Achse drehbar an dem ersten Hebel gelagert, wobei die Drehachse vorzugsweise parallel zur Anlenkachse des ersten Hebels an dem Schalensitz ausgerichtet ist. Diese Befestigung der Hülse an dem ersten Hebel erfolgt zweckmäßigerweise zwischen dessen beiden Anlenkpunkten, vorzugsweise nahe der Anlenkstelle des ersten Hebels an dem Schalensitz, und zwar zwischen den beiden Anlenkpunkten dieses Hebels. Gemäß einer in der Zeichnung nicht näher dargestellten Variante für die Bedienung der Einstellspindel weist diese eine Betätigung auf, die ein Verstellglied enthält, das von der Vorderseite des Kindersicherheitssitzes her bedienbar ist. Gemäß einer weiteren Variante enthält die Betätigung für die Einstellspindel ein Verstellglied, das von der Seitenwand des Kindersicherheitssitzes her bedienbar ist.

Als besonders günstig hat es sich bei den verschiedenen Konstruktionen erwiesen, wenn der Betätigungsmechanismus für den ersten Hebel in dem Seitenbereich des Schalensitzes, vorzugsweise im Bodenbereich und/oder in einer der Armlehnen einer Sitzschale angeordnet ist, da dort genügend Konstruktionsraum zur Verfügung steht. Die so abgedeckte Mechanik vermeidet jede Verletzungsgefahr für die zu transportierenden Kinder. Daneben ermöglicht dies eine einfache Montage, da die Sitzschale lediglich mit einem entsprechenden Hohlraum versehen sein muß und dann über die Konstruktion gestülpt werden kann.

Gemäß einer weiteren besonders bevorzugten Ausgestaltung des neuerungsgemäßen Kindersicherheitssitzes enthält der Schalensitz ein Rahmengestell, das die eigentliche Sitzschale aufnimmt, und an dem der Betätigungsmechanismus gehaltert sowie der erste Hebel angelenkt sind. Die Sitzschale besteht vorzugsweise in an sich bekannter Weise aus einem geschäumten Kunststoff, der in der Regel mit einem Sitzbezug versehen ist. Da es sich insofern um bekannte Konstruktionen handelt, wird hierauf im Rahmen dieser Anmeldung nicht näher eingegangen.

Als besonders vorteilhaft hat es sich erwiesen, wenn das Rahmengestell einen O-ringförmigen Rahmen enthält mit vorzugsweise geradlinigen Ober- und Unterseiten, welche an das Kopf- bzw. Fußende des Kindersicherheitssitzes zu liegen kommen, sowie mit Seitenbereichen, die im wesentlichen in senkrecht zur Ober- und Unterseite verlaufenden Ebenen angeordnet sind. Der O-ringförmige Rahmen ist zweckmäßigerweise in seinen Seitenbereichen zumindest zweimal abgebogen. Hierbei verläuft der an die Unterseite des Rahmens angrenzende Teil der Seitenbereiche bei eingebautem Schalensitz, wenn dieser die Sitzlage einnimmt, längs des Bodens der Sitzschale und parallel zur Oberfläche der Auflage. An diesen Bereich schließen sich über eine erste Abbiegung, die mit der rückwärtigen Verlängerung des ersten Bereichs einen spitzen Winkel bildet, Übergangsteile an. Die Übergangsteile gehen über die zweite Abbiegung in die oberen Teile der Seitenbereiche über, welche der Rückenlehne der Sitzschale folgend die Rückseite des Schalensitzes bilden. Wenn der Kindersicherheitssitz seine Sitzposition einnimmt, liegt die zweite Abbiegung in etwa über dem Anlenkpunkt des ersten Hebels an der Auflage. Für die Stabilität des Rahmengestells ist es besonders günstig, wenn es als Rohrrahmen ausgebildet ist.

Der Rahmen haltert zweckmäßigerweise im Bereich seiner ersten Abbiegung, und zwar zweckmäßigerweise kurz hinter derselben, die Drehachse für die Rollen, die, wie bereits vorstehend erwähnt, vorzugsweise unter dem auf der Oberseite der Auflage befestigten Bügel durchläuft.

Im Rückenbereich des Schalensitzes, vorzugsweise am Rahmengestell selbst, sind mit Vorteil Mittel zur Führung des Schultergurtteils von einem Sicherheitsgurtsystem des Kraftfahrzeugs vorgesehen. Dies geschieht zweckmäßigerweise dadurch, daß an dem Rahmengestell im Bereich eines oberen Querholmes und zumindest im Seitenbereich unter demselben je ein ösenförmiger Führungsbügel angeordnet ist, in den das Gurtband einführbar ist. Die ösenförmigen Führungsbügel werden zweckmäßigerweise von zwei sich überlappenden, frei abstehenden Bügelteilen gebildet, von denen das freie Ende des einen über das freie Ende des anderen gebogen ist, so daß das Gurtband gegen mögliche Verletzungen geschützt ist. An der Rückseite des Kindersicherheitssitzes, vorzugsweise im unteren Bereich, ist des weiteren ein Rückhalteelement vorgesehen, in welches der Beckengurtteil eines Sicherheitsgurtes einführbar ist, so daß auch dieser dazu beiträgt, den Kindersicherheitssitz fest auf dem Sitz des Kraftfahrzeugs zu halten. Das Rückhalteelement ist mit Vorzug an der Auflage befestigt oder an dem zumindest einen ersten Hebel, wobei im letzteren Falle die Befestigung günstigerweise an der Querstrebe erfolgt, welche den rechts und links an dem Schalensitz angebrachten ersten Hebel verbindet, und die Drehachse der Hebel für deren Anlenkung an der Auflage bildet. Das Rückhalteelement ist zweckmäßigerweise als U-förmiger Bügel ausgebildet, der mit beiden U-Schenkeln gehaltert ist, wobei sein frei nach oben ragender Bereich hakenförmig auf sich zurückgebogen ist.

Die lösbare Halterung ist vorzugsweise am Rahmengestell selbst vorgesehen.

Die Sicherung der Kinder in der Sitzschale erfolgt gemäß einer bevorzugten Ausgestaltung des Kindersicherheitssitzes mittels eines Hosenträgergurtes, wobei die Schultergurtbänder desselben vorzugsweise an einer Querstrebe des Rahmengestells und/oder die Beckengurtbänder vorzugsweise an der Drehachse der Rollen befestigt sind und die Gurtbänder durch Schlitze in der Sitzschale nach vorne herausführen. Die einfachste Befestigung der Beckengurtbänder erfolgt durch Herumlegung eines Stück Gurtbandes um die Drehachse der Rollen, wobei die freien Enden mit einem Schloßelement versehen sind, welche das rechte bzw. linke Ende der Beckengurtbänder bilden.

Vorteilhaft ist im unteren Bereich eine weitere lösbare Halterung für den Schulterschräggurt des 3-Punkt-Sicherheitsgurtes vorgesehen, um ein Hochkippen des durch den Schulterschräggurt im Bereich seiner Oberkante gehaltenen Kindersitzes im Falle eines Aufpralles zu verhindern.

Wenn schließlich noch die Schultergurte des Hosenträgergurtsystems an der gleichen Querstrebe befestigt sind, wie das Schulterschräggurtband des 3-Punkt-Sicherheitsgurtes, ergibt sich eine festigkeitsmäßig optimale Übertragung der Haltekräfte von dem 3-Punkt-Sicherheitsgurtsystem des Kraftfahrzeuges auf das Hosenträgergurtsystem des Kindersicherheitssitzes.

Die beiliegenden Zeichnungen bevorzugter Ausführungsbeispiele dienen der weiteren Erläuterung der Erfindung.

Fig. 1 zeigt eine perspektivische Gesamtansicht eines Rahmengestells für einen Kindersicherheitssitz, bei dem aus Gründen der Übersichtlichkeit lediglich die beispielsweise aus Kunststoffschaum bestehende und auf das Rahmengestell aufgesetzte Sitzschale weggelassen ist.

Fig. 2 zeigt eine Frontansicht auf den Kindersicherheitssitz nach Fig. 1 mit schematisch angedeutetem Kind.

Fig. 3 zeigt eine erste Funktionsstellung des Kinderschiheitssitzes in Seitenansicht, bei welcher dieser die Sitzstellung einnimmt.

Fig. 4 zeigt eine zweite Funktionsstellung des Kindersicherheitssitzes in Seitenansicht, bei welchem dieser die Ruhestellung einnimmt.

Fig. 5 und 6 zeigen eine erste Variante der Gurtbefestigung am Lehnenteil des Sitzgestells in einer Ansicht von hinten, sowie einen Schnitt gemäß der Linie VI-VI in Fig. 5.

Fig. 7 und 8 zeigen eine zweite Variante der Gurtbefestigung in gleicher Darstellungsart wie in den Figuren 5 und 6.

Fig. 9 und 10 zeigen zwei Detailseitenansichten von einer zweiten Ausführungsform des Verstellmechanismus, wobei Fig. 9 eine erste Funktionsstellung wiedergibt, bei der der Kindersicherheitssitz die Sitzlage einnimmt, und Fig. 10 eine zweite Funktionsstellung wiedergibt, bei welcher der Kindersicherheitssitz in Ruhelage ist.

Fig. 11 zeigt einen Schnitt längs der Linie XI-XI in Fig. 10.

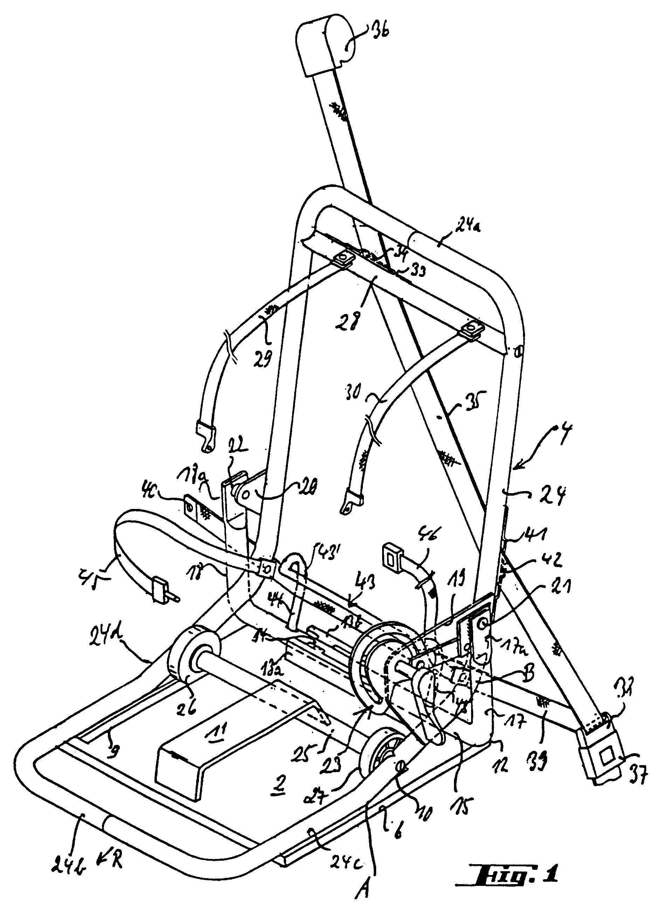

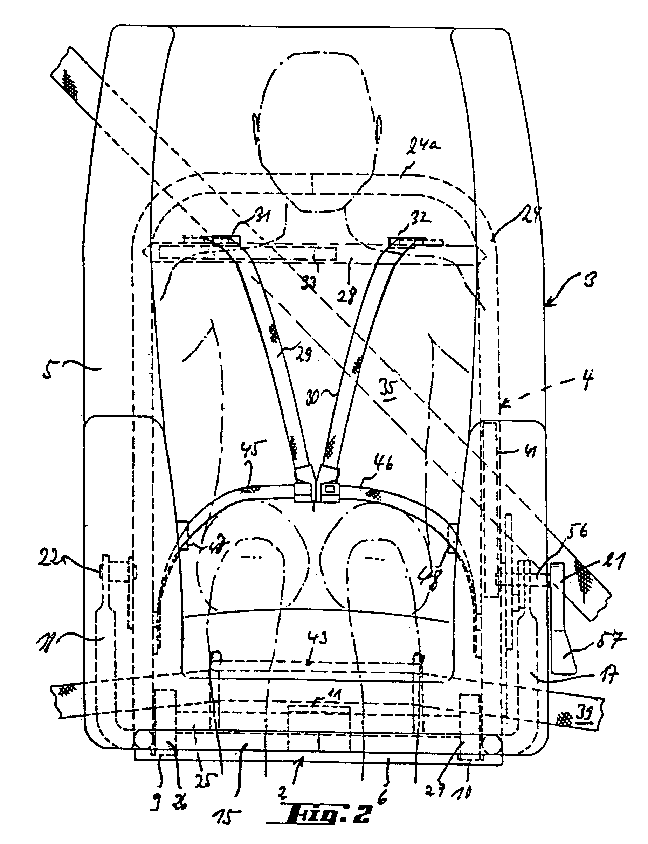

Die Zeichnungen zeigen einen Kindersicherheitssitz 1, der aus einer Auflage 2 und einem Schalensitz 3 besteht, welch letzterer von einem Rahmengestell 4 und einer durch das Rahmengestell 4 gehalterten Sitzschale 5 gebildet ist, welche in üblicher Weise und wie in Figur 2 schematisch angedeutet, das Kind aufnimmt und haltert.

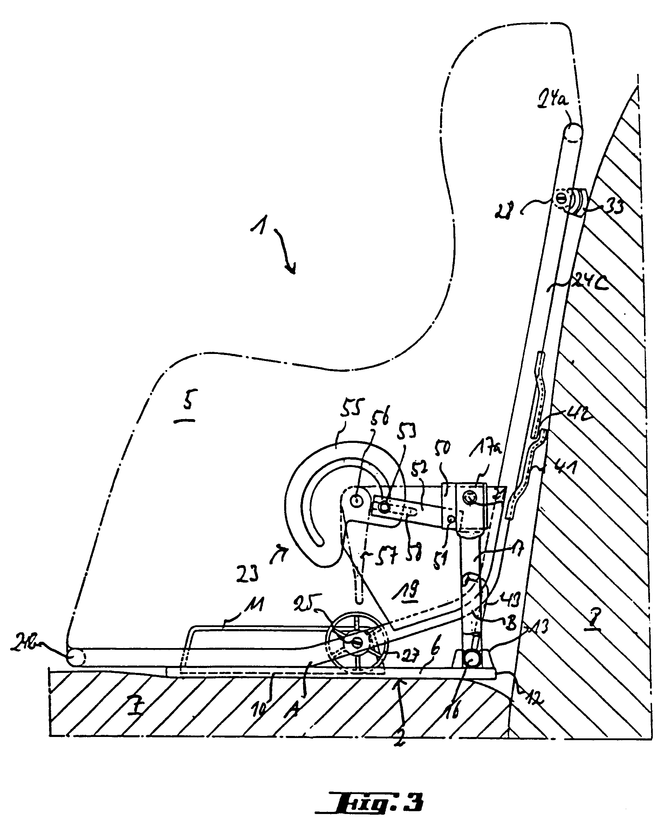

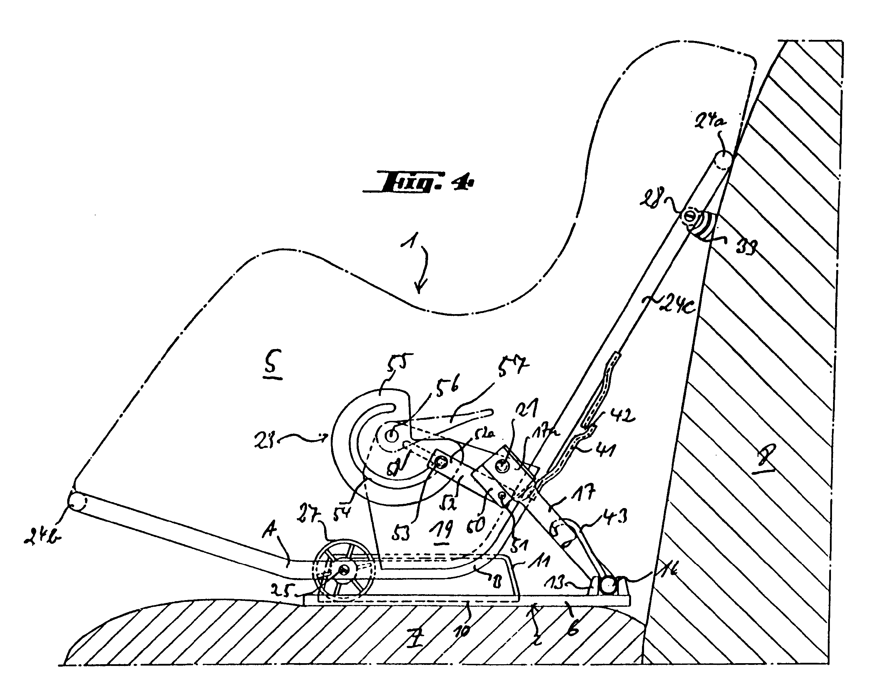

Die Auflage 2 besteht in den dargestellten Ausführungsbeispielen aus einer ebenen Platte 6, die, wie in den Figuren 3 und 4 dargestellt, auf den Sitzbereich 7 eines Kraftfahrzeugsitzes gestellt werden kann, wobei das rückwärtige Ende der Platte 6 bis nahe an die Vorderseite der Lehne 8 des Kraftfahrzeugsitzes heranreicht. Die Platte 6 enthält benachbart zu ihren Seitenbereichen Vertiefungen 9 und 10, die als Führungsschienen für später noch näher zu beschreibende Rollen dienen, welche an der Unterseite des Schalensitzes 3 befestigt sind. In der Mitte der Platte 6 befindet sich ein von der Oberfläche der Platte 6 nach oben abstehender U-förmiger Bügel 11, der mit seinen freien Enden auf der Platte 6 befestigt ist. Am rückwärtigen Ende der Platte 6 und parallel zu deren rückwärtigen Kante 12 ist ein Lagerbock 13 befestigt, der aus zwei L-förmig nach oben abstehenden Winkelstücken 13a und 13b besteht, die an ihren gegeneinander weisenden Enden mit Nasen 14 versehen sind. In dem Lagerbock 13 ist ein U-förmiger Bügel 15 drehbar gelagert, so daß der Lagerbock 13 eine Schwenkachse 16 für den Bügel 15 festlegt, um welche die zueinander parallelen freien Enden des Bügels 15 schwenkbar sind, der im dargestellten Falle aus einem abgebogenen Rundrohr besteht, dessen Enden abgeflacht sind. Die U-Schenkel 17 und 18 des Bügels 15 bilden einen in doppelter Ausfertigung vorhandenen ersten Hebel, dessen freie Enden 17a,18a mit dem Rahmengestell 4 über entsprechende Fortsätze 19,20 gelenkig verbunden sind, wobei die durch die Drehpunkte 21,22 gehenden Schwenkachsen parallel zur Schwenkachse 16 verlaufen. Ein in Figur 1 nur schematisch dargestellter Verstellmechanismus 23, auf den weiter unten noch näher eingegangen werden soll, ist über den plattenartig ausgebildeten Fortsatz 19 am Rahmengestell 4 befestigt.

Das Rahmengestell 4 besteht aus einem O-ringförmigen Rohrrahmen 24, mit einem geradlinigen Oberteil 24a, einem dazu parallelen geradlinigen Unterteil 24b, sowie in zwei im wesentlichen zueinander parallelen Ebenen gelegenen Seitenteilen 24c und 24d, welch letztere an den mit A und B bezeichneten Stellen jeweils abgebogen sind, wobei der dem Vorderteil zugekehrte Bereich der Seitenteile 24c und 24d bei der in Figur 1 dargestellten Lage, welche der Sitzstellung des Kindersicherheitssitzes entspricht, im wesentlichen parallel zur Oberseite der Platte 6 verlaufen, während die dem Oberteil 24a zugekehrten Endbereiche den Verlauf der Rückenlehne des Kindersicherheitssitzes wiedergeben. Der zwischen den Abbiegungen A und B belegene Bereich der Seitenteile 24c und 24d verhindert beim Nachvorneverschieben des Rahmengestells 4 in Richtung des Pfeiles R von Figur 1, daß die rückwärtige Kante des Sitzbereiches des Schalensitzes 3 in Kollision mit der Platte 6 gerät.

Die Seitenteile 24c und 24d des Rohrrahmens 24 sind im Bereich zwischen den Abbiegungen A und B, und zwar benachbart zur Abbiegung A, durch eine Achse 25 verbunden, die parallel zur Schwenkachse 16 verläuft und die an ihren äußeren Enden benachbart zu dem Rohrrahmen 24 Rollen 26, 27 trägt, die in den Vertiefungen 9 und 10 der Platte 6 verschiebbar sind. Die Achse 25 läuft unter dem Bügel 11 hindurch, so daß letzterer sowohl ein Abheben des Rahmengestells 4 und damit des gesamten Schalensitzes 3 verhindert, als auch als Begrenzung für die Vor- und Rückbewegung des Rahmengestells 4 längs der Platte 6 dient. Da die Achse 25, wie durch die Schraubenköpfe im Bereich des Rohrrahmens 24 angedeutet, herausnehmbar ist, kann das Rahmengestell 4 einschließlich des U-förmigen Bügels 15 in einfacher Weise von der Auflage 2 getrennt oder auf dieser montiert werden.

Der Rohrrahmen 24 enthält des weiteren benachbart zu dem Oberteil 24a eine Querstrebe 28, an der zum einen die Schultergurte 29, 30 eines Hosenträgergurtsystems befestigt sind, welche durch Schlitze 31, 32 der Sitzschale 5 hindurchreichen, wie dies in Figur 2 gezeigt ist. An der Querstrebe 28 ist zum anderen an deren rückwärtiger Seite ein erster ösenförmiger Führungsbügel 33 angebracht, der durch einen Schlitz 34 die Einführung eines Schulterschräggurtbandes 35 von einem Sicherheitsgurtsystem des Fahrzeugs ermöglicht. Dieses Sicherheitsgurtsystem besteht im dargestellten Falle aus einem Gurtaufwickelmechanismus 36, dem Schulterschrägband 35, einem in ein Schloß 37 einsteckbaren Umlenkbeschlag 38 und einem Beckengurtteil 39, welch letzteres mit seinem freien Ende 40 in nicht näher dargestellte Weise fest am Kraftfahrzeug befestigt ist. An dem seitlichen Teil 24c des Rohrrahmens 24, und zwar zwischen dem oberen Teil 24a und der Abbiegung B, ist ein zweiter ösenförmiger Führungsbügel 41 angebracht, der durch einen Schlitz 42 das Einführen des Schulterschräggurtbandes 35 ermöglicht und eine weitere Führung für dasselbe bildet. Durch die ösenförmigen Führungsbügel 33 und 41 gelingt es, die Rückenlehne des Kindersicherheitssitzes 1 mittels des im Kraftfahrzeug befindlichen Sicherheitsgurtsystems 36-40 sicher zu haltern, wobei der Gurtaufwickelmechanismus 36 bei einer Verstellung des Kindersicherheitssitzes 1 zwischen der Schlaf- und der Ruhelage zusätzliches Gurtband aufwickelt oder freigibt. Im Falle eines Unfalls arretiert dagegen der Gurtaufwickelmechanismus 36 und hält den Kindersicherheitssitz 1 fest im Fahrzeug.

Die Rückhaltewirkung, welche das Schultergurtteil 35 auf den Kindersicherheitssitz 1 ausübt, kann dadurch verstärkt und/oder ersetzt werden, daß das Beckengurtteil 39 des Kraftfahrzeuggurtsystems in ein Rückhalteelement 43 eingeführt wird. Das Rückhalteelement 43 besteht aus einem U-förmigen Bügel, der mit seinen freien Schenkeln 44,45 an dem die ersten Hebel 17,18 verbindenden Bereich des Bügels 15 derart angebracht ist, daß er nach oben absteht, wobei der nach oben ragende Bereich, wie durch das Bezugszeichen 43' angedeutet, in sich selbst hakenförmig zurückgebogen ist. Dies bezweckt, daß das Beckengurtteil 39 nicht nach oben aus dem Rückhalteelement 43 herausrutschen kann.

Bei dem in den Figuren 1 und 2 dargestellten Ausführungsbeispiel sind die beiden Beckengurtbänder 45,46 des das Kind haltenden Hosenträgergurtsystems an dem Rohrrahmen 24 im Bereich der zweiten Abbiegung B befestig:, wobei die Beckengurtbänder durch Öffnungen 47,48 in der Sitzschale 5 hindurchgezogen sind. In einer nicht gezeigten Variante wird ein Stück Gurtband lediglich um die Achse 25 herumgelegt und durch entsprechende Öffnungen in dem Sitzbereich des Schalensitzes 5 nach oben gezogen, wobei die beiden freien Enden dieses Gurtstücks die beiden Beckengurtbänder des Hosenträgergurtsystems bilden und an ihren Enden in üblicher Weise mit entsprechenden Beschlagelementen versehen sind.

Im folgenden soll eine erste Variante des Verstellmechanismus 23 anhand der Figuren 3 und 4 näher erläutert werden. An dem Seitenteil 24c des Rohrrahmens 24, und zwar im Bereich von dessen zweiter Abbiegung B, ist der plattenförmige Fortsatz 19 angebracht, an dem über dem Drehpunkt 21 der erste Hebel 17 schwenkbar angelenkt ist. An dem abgeflachten Endbereich 17a des Hebels 17 ist eine Platte 50 starr befestigt. Im unteren Eckbereich der Platte 50 und seitlich aus der Verbindungslinie der Schwenkachsen 21,16 versetzt, jedoch zwischen denselben belegen, ist über eine Schwenkachse 51 ein zweiter Hebel 52 angelenkt, der an seinem freien Ende 52a einen Zapfen 53 trägt, welcher einen weiteren Anlenkpunkt des Hebels 52 bildet. Der Zapfen 53 ist in einem als Exzenter wirkenden Führungsschlitz 54 einer Exzenterscheibe 55 geführt, die um eine Drehachse 56 mit Hilfe eines Betätigungshebels 57 drehbar ist. Die Schwenkachsen 21,51, sowie 56, verlaufen parallel zueinander und damit auch parallel zur Schwenkachse 16.

In einem bestand von der Schwenkachse 56 und radial zu dieser verlaufend, ist in dem plattenförmigen Fortsatz 19 eine als Führung dienende Nut oder ein Durchbruch 58 angebracht, welcher das Ende des Drehzapfens 51 führt. Der Verlauf des Führungsschlitzes 54 der Exzenterscheibe 55, die Anordnung der verschiedenen Drehachsen 16,21,51,53, die Lage der Nut 58, sowie die Länge der Hebel 17 und 52 sind derart gewählt, daß zum einen die erwünschte Verschiebung zwischen der Sitz- und der Liegestellung des Kindersicherheitssitzes 1 stattfindet, und zum anderen, daß zumindest in den Endlagen der Stift 53 in der Verbindungsgeraden zwischen den Drehachsen 51 und 56 liegt, um eine Selbsthemmung in diesen Endlagen zu bewirken.

Der gesamte Verstellmechanismus ist mit Ausnahme des Betätigungshebels im Inneren der Armlehne der Sitzschale 5 angebracht, während sich der Betätigungshebel 57 außen neben der Armlehne befindet und auf das aus dieser herausstehende Ende der Drehachse 56 drehfest aufgesteckt ist. Da es zur Verschiebung des Schalensitzes 3 zwischen der in Figur 3 gezeigten Sitzlage und der in Figur 4 gezeigten Ruhelage lediglich notwendig ist, den Betätigungshebel 57 um einen weniger als 160° betragenden Winkel zu drehen, ist eine rasche und unkomplizierte Einhandbetätigung möglich.

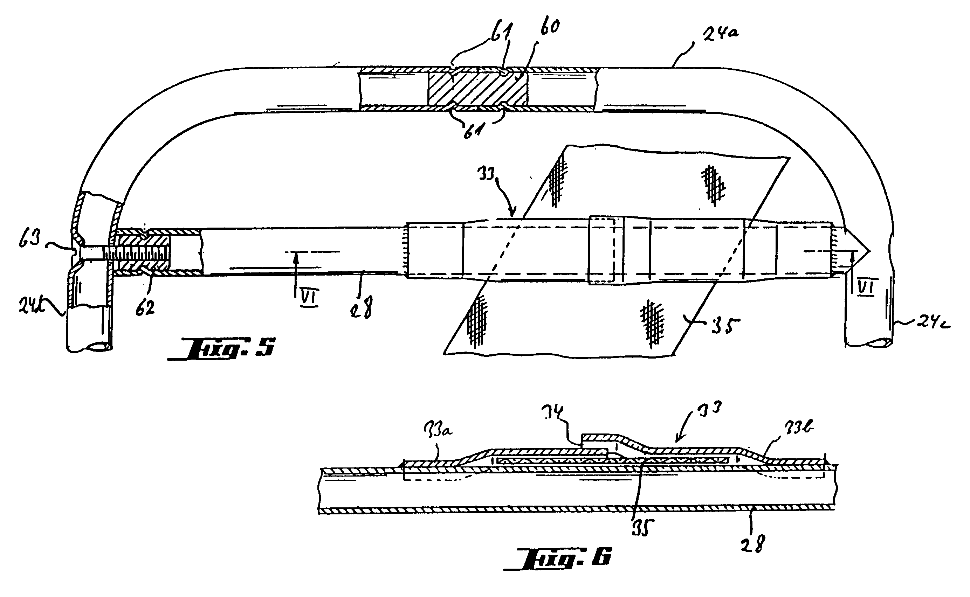

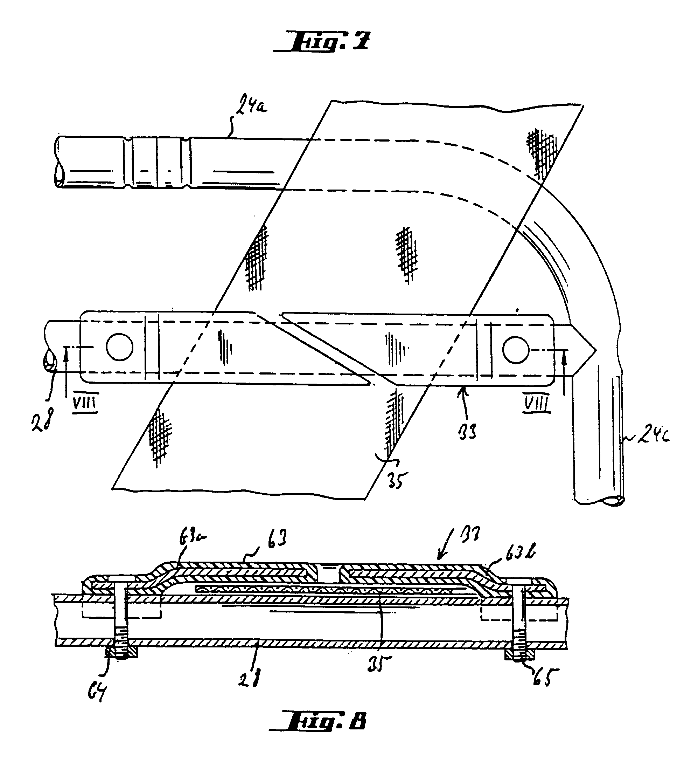

Figur 5 zeigt eine Detailansicht von dem oberen Bereich des Rohrrahmens 24. Man erkennt darin, daß der O-ringförmige Rohrrahmen 24, wie bereits in Figur 1 angedeutet, aus zwei zu seiner Mittellängsebene symmetrischen Teilstücken zusammengesetzt ist, wozu in die beiden freien, einander gegenüberliegenden Enden ein Stöpsel 60 eingesteckt wird. Anschließend werden die freien Rohrenden mit Sicken 61 versehen, die sich auch in den Stöpsel 60 eindrücken, so daß eine unlösbare Verbindung hergestellt wird. Die Querstrebe 28 ist durch eine Schraubverbindung in den O-ringförmigen Rohrrahmen 24 eingesetzt, wobei auch hierzu in die freien Enden der Querstrebe 28 Stöpsel 62 eingesetzt sind, in welche eine durch den Rohrrahmen 24 hindurchgehende Schraube eingeschraubt ist. Figur 5 und Figur 6 zeigen des weiteren den Aufbau von einer Ausführungsform des ersten ösenförmigen Führungsbügels 33 an der Rückseite der Querstrebe 28 einschließlich des Schlitzes 34 zum Einfädeln des Gurtbandteiles 35. Der Führungsbügel 33 besteht aus zwei an die Querstrebe 28 mit einem Ende angeschweißten Streifen 33a und 33b, deren freie Enden einander zugekehrt sind und den Raum für die Aufnahme des Gurtbandes 35 bilden, wobei der Streifen 33b S-förmig über das freie Ende des Streifens 33a gebogen ist, so daß sich deren Enden überlappen und eine abgedeckte Eintrittsöffnung für das Gurtband 35 festlegen.

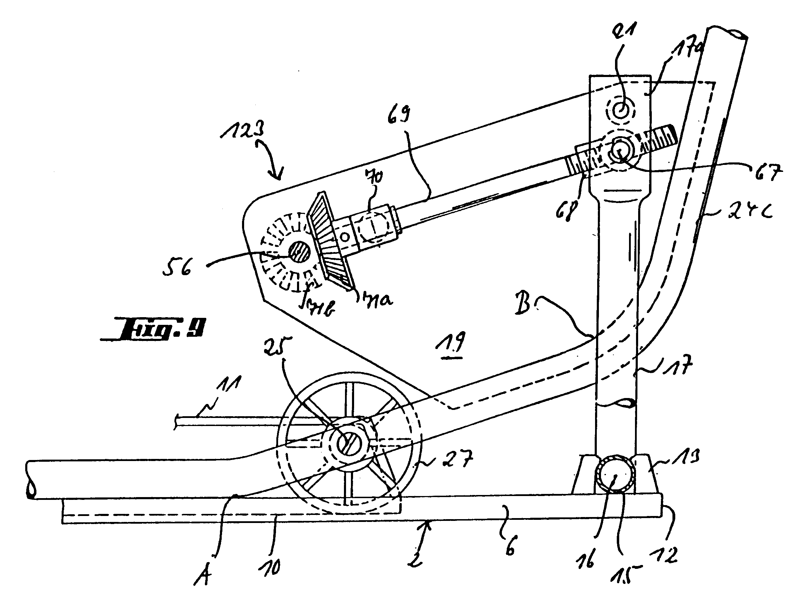

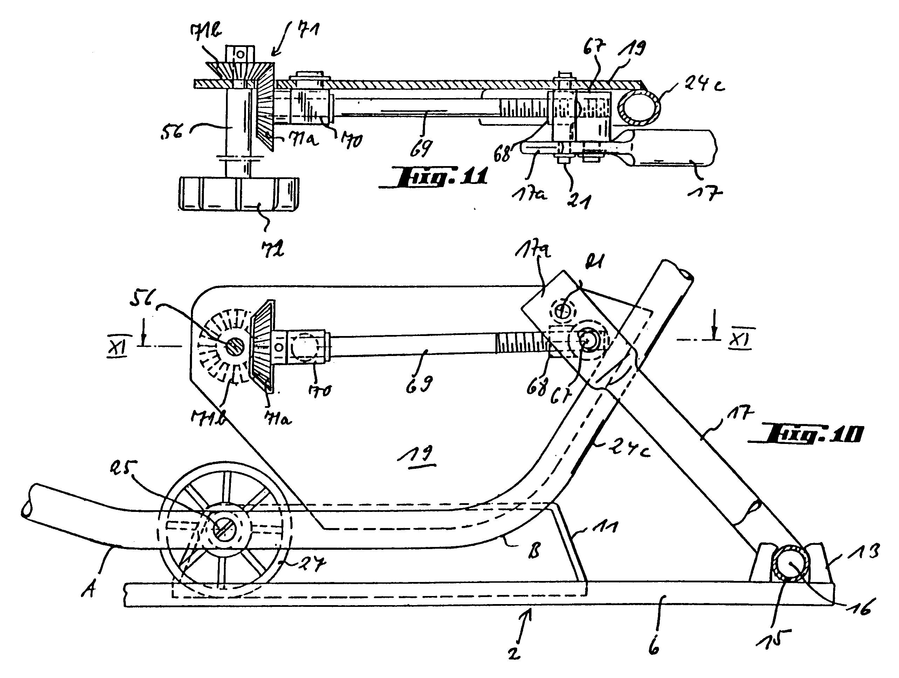

Die in den Figuren 7 und 8 dargestellte zweite Ausführungsform des ersten ösenförmigen Führungsbügels 33 enthält eine schräg zur Längsrichtung der Querstrebe 28 durchtrennte mehrwandige Abdeckplatte 63, deren Teile 63a und 63b beabstandet voneinander auf die Querstrebe aufgeschraubt sind, wie dies durch die Schrauben-Mutter-Verbindungen 64,65 angedeutet ist. Auch hier wird das Gurtband 35 in den zwischen den beiden Teilen 63a und 63b gebildeten Schlitz eingeführt.

Die Figuren 9 bis 11 zeigen eine Variante des in den Figuren 3 und 4 dargestellten Verstellmechanismus 23, der allgemein durch das Bezugzeichen 123 gekennzeichnet ist. Soweit die Bauelemente mit denen der in den Figuren 3 und 4 gezeigten Ausführungsform übereinstimmen, sind sie mit gleichen Bezugzeichen belegt. Es sollen daher im folgenden lediglich die kontruktiven Unterschiede näher erläutert werden. Der erste Hebel 17 enthält längs der Verbindungsgeraden zwischen den Anlenkpunkten 16 und 21 im abgeflachten oberen Bereich 17a einen mit den vorgenannten Drehachsen fluchtenden Drehzapfen 67, der eine Hülse 68 um den Drehzapfen 67 drehbar lagert, wobei die Längsachse der Hülse 68 senkrecht zum Drehzapfen 67 verläuft. Die Hülse 68 enthält ein nicht näher dargestelltes Innengewinde. In das Innengewinde greift ein am freien Ende einer Antriebsspindel 69 angebrachtes Außengewinde ein, so daß der erste Hebel 17 durch ein Drehen der Antriebsspindel verschwenkt und damit das Rahmengestell 4 unter gleichzeitigem Kippen längs der Platte 6 verschoben wird, soweit dies der Bügel 11 zuläßt. Die Abstände der Drehachsen 16,21 und 67 sind dabei derart gewählt, daß, wie im Falle des ersten Ausführungsbeispiels, der Anlagebereich des Schalensitzes an der Rückenlehne des Kraftfahrzeugsitzes nicht merkbar nach rückwärts verschwenkt wird, wenn der Kindersicherheitssitz 1 aus der in Figur 9 gezeigten Sitzstellung in die in Figur 10 gezeigten Schlafstellung übergeführt wird.

Die Drehung der Antriebsspindel 69, die in einem an dem plattenförmigen Fortsatz 19 befestigten Lagerbock 70 gehaltert ist, erfolgt mittels eines rechtwinkligen Kegelradgetriebes 71, bei dem das eine Kegelrad 71a auf dem freien Ende der Antriebsspindel 69 und das andere Kegelrad 71b auf der Drehachse 56 gehaltert ist, welch letztere an ihrem entgegengesetzten Ende einen Drehknopf 72 trägt, der außen an der Armlehne der Sitzschale angebracht ist. Für eine vollständige Verstellung des Kindersicherheitssitzes zwischen den in Figur 9 und Figur 10 angedeuteten Endstellungen muß der Drehknopf 72 mehrere Umdrehungen verdreht werden, was langwieriger ist als die Verstellung bei der in den Figuren 3 und 4 beschriebenen Ausführungsform.

**Patentansprüche**

1. Kindersicherheitssitz, insbesondere für Kraftfahrzeuge, mit
a) einem Schalensitz (3) und einer Auflage (2) zur schwenkbaren Halterung des Schalensitzes (3) auf dem Sitz eines Kraftfahrzeuges, wobei der Schalensitz (3) mittels eines Betätigungsmechanismus (23, 123) zur Überführung aus einer Sitz- in eine Ruhe- bzw. Schlafstellung und umgekehrt längs der Auflage (2) verschiebbar ist, und
b) einem ersten drehbar an dem Schalensitz (3) und der Auflage (2) angelenkten Hebel (17; 18), der so ausgelegt ist, daß sich die Oberkante des Schalensitzes (3) bei seiner Verschiebung längs der Auflage (2) im wesentlichen parallel zur Oberfläche der Rückenlehne des Kraftfahrzeugsitzes bewegt,
**dadurch gekennzeichnet, daß**
c) an der Rückseite des Schalensitzes (3) im Bereich seiner Oberkante eine lösbare Halterung (33, 34) für den Schulterschräggurt (35) eines 3-Punkt-Sicherheitsgurtes vorgesehen ist, und
d) an der Auflage (2) eine weitere lösbare Halterung (43) für den Beckengurt (39) des 3-Punkt-Sicherheitsgurtes vorgesehen ist.

2. Kindersicherheitssitz nach Anspruch 1, dadurch gekennzeichnet, daß der Betätigungsmechanismus (23;123) in den Schalensitz (3) integriert ist.

4. Kindersicherheitssitz nach einem der vorstehenden Ansprüche, dadurch gekennzeichnet, daß der Schalensitz (3) an seiner Unterseite oder die Auflage (2) an ihrer Oberseite zumindest eine im wesentlichen ebene Gleitfläche (9;10) enthalten, die in der Verschieberichtung verläuft.

4. Kindersicherheitssitz nach einem der vorstehenden Ansprüche, dadurch gekennzeichnet, daß die Auflage (2) den Schalensitz (3) längsverschieblich festhält.

5. Kindersicherheitssitz nach Anspruch 4, dadurch gekennzeichnet, daß an der Unterseite des Schalensitzes (3) bzw. an der Oberseite der Auflage (2) jeweils beabstandet von denselben zumindest ein im wesentlichen in Richtung der Längsverschiebung verlaufender Bügel (11) angeordnet ist, unter dem ein an der Auflage (2) bzw. dem Schalensitz (3) befestigtes Halteelement (25) hindurchgreift.

6. Kindersicherheitssitz nach einem der vorstehenden Ansprüche, dadurch gekennzeichnet daß der zumindest eine erste Hebel (17;18) am seitlichen Randbereich der Auflage (2) angelenkt ist.

7. Kindersicherheitssitz nach einem der vorstehenden Ansprüche, dadurch gekennzeichnet, daß an beiden Seiten der Auflage (2) je ein Hebel (17;18) angebracht ist, von denen zumindest einer (17) in Wirkverbindung mit dem Betätigungsmechanismus (23;123) steht.

8. Kindersicherheitssitz nach Anspruch 7, dadurch gekennzeichnet, daß die Hebel (17;18) symmetrisch zur Längsmittelachse des Schalensitzes (3) angeordnet sind.

9. Kindersicherheitssitz nach Anspruch 7 oder 8, dadurch gekennzeichnet, daß die Hebel (17;18) von einem U-förmigen Bügel (15) gebildet sind, dessen freie Schenkel an dem Schalensitz (3) angelenkt (21,22) sind, und der im Bereich des die freien Enden verbindenden Teiles schwenkbar gelagert ist (16).

10. Kindersicherheitssitz nach einem der vorstehenden Ansprüche, dadurch gekennzeichnet, daß die Unterseite des Schalensitzes (3) im rückwärtigen bereich nach oben abgebogen verläuft.

11. Kindersicherheitssitz nach einem der Ansprüche 3 bis 10, dadurch gekennzeichnet, daß an der Unterseite des Schalensitzes (3) oder an der Oberseite der Auflage (2) zumindest eine Rolle (26,27) vorgesehen ist, über welche sich der Schalensitz (3) an der Auflage (2) abstützt, wobei die zumindest eine Rolle (26;27) vor der Anlenkstelle (16) des Hebels (17;18) an der Auflage (2) angeordnet ist.

12. Kindersicherheitssitz nach Anspruch 10 oder 11, dadurch gekennzeichnet, daß die zumindest eine Rolle (26;27) an der Unterseite des Schalensitzes (3) im Bereich der Abbiegung (A) desselben angeordnet ist.

13. Kindersicherheitssitz nach einem der Ansprüche 9 bis 12,dadurch gekennzeichnet, daß an der Unterseite des Schalensitzes (3) an der Enden einer quer zur Sitzmittelebene verlaufenden Achse (25) je eine Rolle (26;27) vorgesehen ist, wobei die Achse (25) unter dem Bügel (11) verläuft.

14. Kindersicherheitssitz nach einem der vorstehenden Ansprüche, dadurch gekennzeichnet, daß der erste Hebel (17;18) ein einarmiger Hebel ist.

15. Kindersicherheitssitz nach einem der vorstehenden Ansprüche, dadurch gekennzeichnet, daß der Verstellmechanismus (23) einen zweiten Hebel (52) enthält, dessen eines Ende gelenkig (51) am ersten Hebel (17) befestigtes ist und dessen anderes Ende (52a) in Eingriff mit einen um eine Drehachse (56) verschwenkbaren Exzenter (55) steht.

16. Kindersicherheitssitz nach Anspruch 15, dadurch gekennzeichnet, daß der Anlenkpunkt (51) des zweiten Hebels (52) am ersten Hebel (17) benachbart zu dessen Anlekstelle (21) an dem Schalensitz (3) zwischen diesem Anlenkpunkt (21) des erstens Hebels (17) und dessen Anlenkpunkt (16) an der Auflage (2) belegen ist.

17. Kindersicherheitssitz nach Anspruch 16, dadurch gekennzeichnet, daß der Anlenkpunkt (51) des zweiten Hebels (52) am erdten Hebel (17) seitlich zu der die Anlenkpunkte (16;21) des ersten Hebels (17) verbindenden Geraden versetzt ist.

18. Kindersicherheitssitz nach einem der Ansprüche 15 bis 17, dadurch gekennzeichnet, daß das im Eingriff mit dem Exzenter (55) stehende Ende (52a) des zweiten Hebels (52) in einer Längsführung (58) zwangsgeführt ist, welche radial zum Drehpunkt (56) des Exzenters (55) verläuft.

19. Kindersicherheitssitz nach Anspruch 18, dadurch gekennzeichnet, daß die Länge der Hebel (17;52), die Lage des Anlenkpunktes (51) des zweiten Hebels (52) am ersten Hebel (17), sowie der Verlauf (54) des Exzenters (55) derart gewählt sind, daß die Drehachse (56) des Exzenters (55) und die beiden Anlenkpunkte (51,53) des zweiten Hebels (52) zumindest in den beiden Endstellungen in einer Geraden liegen.

20. Kindersicherheitssitz nach einem der Ansprüche 15 bis 19, dadurch gekennzeichnet, daß der Exzenter (55) von einer Exzenterscheibe (55) mit einem Führungsschlitz (54) gebildet ist, in welchem ein Drehzapfen (53) geführt ist, der den einen Anlekpunkt des zweiten Hebels (52) bildet.

21. Kindersicherheitssitz nach den Ansprüchen 18 und 20, dadurch gekennzeichnet, daß der Drehzapfen (53) in der Längsführung (58) zwangsgeführt ist.

22. Kindersicherheitssitz nach einem der Ansprüche 15 bis 21 dadurch gekennzeichnet, daß ein Handrad oder ein Betätigungshebel (57) mit der Drehachse (56) des Exzenters (55) verbunden ist.

23. Kindersicherheitssitz nach einem der Ansprüche 1 bis 14, dadurch gekennzeichnet, daß der Verdtellmechanismus (123) eine an dem ersten Hebel (17) drehbar angebrachte Hülse (68) enthält, welche über ein Innengewinde einen mit einem Außengewinde versehenen Bereich einer Einstellspindel (69) aufnimmt.

24. Kindersicherheitssitz nach Anspruch 23, dadurch gekennzeichnet, daß die Hülse (68) um eine senkrecht zu ihrer Längsachse verlaufende Achse (67) drehbar an dem ersten Hebel (17) gelagert ist, welche parallel zur Anlenkachse (21) des ersten Hebels (17) an dem Schalensitz (3) ausgerichtet ist.

25. Kindersicherheitssitz nach Anspruch 24 dadurch gekennzeichnet, daß die Hülse (68) an dem ersten Hebel (17) zwischen dessen beiden Anlenkpunkten (16;21) angebracht ist.

26. Kindersicherheitssitz nach einem der Ansprüche 23 bis 25, dadurch gekennzeichnet, daß eine Betätigung für die Eintellspindel (69) vorgesehen ist, die ein Verstellglied (Betätigungshebel 57) enthält, das von der Vorderseite des Kindersicherheitssitzes her bedienbar ist.

27. Kindersicherheitssitz nach einem der Ansprüche 23 bis 25, dadurch gekennzeichnet, daß eine Betätigung (70,71,72) für die Einstellspindel (69) vorgesehen ist, die ein Verstellglied (Drehknopf 72) enthält, das von der Seitenwand des Kindersicherheitssitzes (1) her bedienbar ist.

28. Kindersicherheitssitz nach einem der vorstehenden Ansprüche, dadurch gekennzeichnet, daß der Betätigungsmechanismus (23;123) für den ersten Hebel (17) in dem Seitenbereich des Schalensitzes (3), vorzugsweise in einer der Armlehnen einer Sitzschale (5) angeordnet ist.

29. Kindersicherheitssitz nach einem der vorstehenden Ansprüche, dadurch gekennzeichnet, daß der Schalensitz (3) ein Rahmengestell (4), das die eigentliche Sitzschale (5) aufnimmt, enthält, und an dem der Betätigungsmechanismus (23;123) gehaltert sowie der erste Hebel (17) angelenkt sind.

30. Kindersicherheitssitz nach Anspruch 29, dadurch gekennzeichnet, daß das Rahmengestell (4) einen O-ringförmigen Rahmen (24) enthält, der in seinen Seitenbereichen zumindest zweimal abgebogen ist (A,B).

31. Kindersicherheitssitz nach den Ansprüchen 11 und 30, dadurch gekennzeichnet, daß an dem Rahmen (24) im Bereich seiner ersten Abbiegung (A) die Drehachse (25) für die Rollen (26,27) angebracht ist.

32. Kindersicherheitssitz nach einem der Ansprüche 29 bis 31, dadurch gekennzeichnet, daß die lösbare Halterung (33, 34) am Rahmengestell (4) vorgesehen ist.

33. Kindersicherheitssitz nach einem der vorstehenden Ansprüche, dadurch gekennzeichnet, daß die Sicherung eines Kindes in der Sitzschale mittels eines Hosenträgergurtes (29,30;45,46) erfolgt.

20. Kindersicherheitssitz nach Anspruch 33, dadurch gekennzeichnet, daß die Schultergurtbänder (29,30) an einer Querstrebe (28) des Rahmengestells (4) und/oder daß die Beckengurtbänder (45,46) an der Drehachse (25) der Rollen (26,27) befestigt sind.

35. Kindersicherheitssitz nach einem der vorhergehenden Ansprüche, dadurch gekennzeichnet, daß im unteren Bereich eine weitere lösbare Halterung (41, 42) für den Schulterschräggurt (35) des 3-Punkt-Sicherheitsgurtes vorgesehen ist.

36. Kindersicherheitssitz nach einem der Ansprüche 33 bis 35, dadurch gekennzeichnet, daß die Schultergurte (29, 30) des Hosenträgergurtsystems (29, 30; 45, 46) an der gleichen Querstrebe (28) befestigt sind, wie das Schulterschräggurtband (35) des 3-Punkt-Sicherheitsgurtes.

## Claims

1. Child safety seat, in particular for motor vehicles, with
   a) a bucket seat (3) and a support (2) for the pivotable mounting of the bucket seat (3) on the seat of a motor vehicle, wherein the bucket seat (3) is displaceable along the support (2) for conversion out of a sitting position into a resting or sleeping position and conversely by means of an actuating mechanism (23, 123), and
   b) a first lever (17; 18), which is articulated to be rotatable at the bucket seat (3) and the support (2) and which is so designed that the upper edge of the bucket seat (3) during its displacement along the support (2) moves substantially parallelly to the surface of the back rest of the motor vehicle seat,
   characterised thereby, that
   c) a releasable mounting (33, 34) for the oblique shoulder belt (35) of a three-point safety belt is provided at the rear side of the bucket seat (3) in the region of its upper edge and
   d) a further releasable mounting (43) for the lap belt (39) of the three-point safety belt is provided at the support (2).

2. Child safety seat according to claim 1, characterised thereby, that the actuating mechanism (23; 123) is integrated in the bucket seat (3).

3. Child safety seat according to one of the preceding claims, characterised thereby, that the bucket seat (3) at its underside or the support (2) at its upper side include a substantially planar sliding surface (9; 10), which extends in the direction of displacement.

4. Child safety seat according to one of the preceding claims, characterised thereby, that the support (2) retains the bucket seat (3) to be longitudinally displaceable.

5. Child safety seat according to claim 4, characterised thereby, that at least one bracket (11), which extends substantially in the direction of the longitudinal displacement and under which a retaining element (25) fastened at the support (2) or the bucket seat (3) engages through, is arranged at the underside of the bucket seat (3) or at the upper side of the support (2) each time spaced apart therefrom.

6. Child safety seat according to one of the preceding claims, characterised thereby, that the at least one first lever (17; 18) is articulated at the lateral rim region of the support (2).

7. Child safety seat according to one of the preceding claims, characterised thereby, that a respective lever (17; 18), of which at least one stands in operative connection with the actuating mechanism (23; 123), is mounted at both sides of the support (2).

8. Child safety seat according to claim 7, characterised thereby, that the levers (17; 18) are arranged symmetrically to the longitudinal centre line of the bucket seat (3).

9. Child safety seat according to claim 7 or 8, characterised thereby, that both the levers (17; 18) are formed by a U-shaped bracket (15), the free limbs of which are articulated (21, 22) to the bucket seat (3) and which is borne (16) to be pivotable in the region of the part connecting the free ends.

10. Child safety seat according to one of the preceding claims, characterised thereby, that the underside of the bucket seat (3) extends bent away upwardly in the rearward region.

11. Child safety seat according to one of the claims 3 to 10, characterised thereby, that at least one roller (26; 27), by way of which the bucket seat (3) bears on the support (2), is provided at the underside of the bucket seat (3) or at the upper side of the support (2), wherein the at least one roller (26; 27) is arranged at the support (2) in front of the articulation point (16) of the lever (17; 18).

12. Child safety seat according to claim 10 or 11, characterised thereby, that the at least one roller (26; 27) is arranged at the underside of the bucket seat (3) in the region of the bend (A) thereof.

13. Child safety seat according to one of the claims 9 to 12, characterised thereby, that a respective roller (26; 27) is provided at the ends of an axle (25) extending at the underside of the bucket seat (3) transversely to the centre plane of the seat, wherein the axle (25) extends below the bracket (11).

14. Child safety seat according to one of the preceding claims, characterised thereby, that the first lever (17; 18) is a one-armed lever.

15. Child safety seat according to one of the preceding claims, characterised thereby, that the adjusting mechanism (23) includes a second lever (52), the one end of which is articulatedly (51) fastened at the first lever (17) and the other end (52a) of which stands in engagement with an eccentric (55) pivotable about a rotary axle (56).

16. Child safety seat according to claim 15, characterised thereby, that the articulation point (51) of the second lever (52) at the first lever (17) is disposed adjacent to the articulation point (21) thereof at the bucket seat (3) and between this articulation point (21) of the first lever (17) and its articulation point (16) at the support (2).

17. Child safety seat according to claim 16, characterised thereby, that the articulation point (51) of the second lever (52) at the first lever (17) is displaced laterally relative to the straight line connecting the articulation points (16; 21) of the first lever (17).

18. Child safety seat according to one of the claims 15 to 17, characterised thereby, that end (52a) of the second lever (52), which stands in engagement with the eccentric (55), is constrainedly guided in a longitudinal guide (58), which extends radially to the rotational centre (56) of the eccentric (55).

19. Child safety seat according to claim 18, characterised thereby, that the length of the levers (17; 52), the position of the articulation point (51) of the second lever (52) at the first lever (17) as well as the course of the eccentric (55) are so chosen that the rotary axis (56) of the eccentric (55) and both the articulation points (51, 53) of the second lever (52) lie in a straight line at least in both the end positions.

20. Child safety seat according to one of the claims 15 to 19, characterised thereby, that the eccentric (55) is formed by an eccentric sheave (55) with a guide slot (54), in which a rotary spigot (53) is guided, which forms the one articulation point of the second lever (52).

21. Child safety seat according to the claims 18 and 20, characterised thereby, that the rotary spigot (53) is constrainedly guided in the longitudinal guide (58).

22. Child safety seat according to one of the claims 15 to 21, characterised thereby, that a handwheel or an actuating lever (57) is connected with the rotary axis (56) of the eccentric (55).

23. Child safety seat according to one of the claims 1 to 14, characterised thereby, that the adjusting mechanism (123) includes a sleeve (68), which is mounted to be rotatable at the first lever (17) and which by way of an internal thread receives a region, which is provided with an external thread, of an adjusting spindle (69).

24. Child safety seat according to claim 23, characterised thereby, that the sleeve (68) is borne at the first lever (17) to be rotatable about an axis (67), which extends perpendicularly to its longitudinal axis and oriented parallelly to the articulation axis (21) of the first lever (17) at the bucket seat (3).

25. Child safety seat according to claim 24, characterised thereby, that the sleeve (68) is mounted at the first lever (17) between both its articulation points (16; 21).

26. Child safety seat according to one of the claims 23 to 25, characterised thereby, that an actuating device, which includes an adjusting member (actuating lever 57), which is operable from the front side of the child safety seat, is provided for the adjusting spindle (69).

27. Child safety seat according to one of the claims 23 to 25, characterised thereby, that an actuating device (70, 71, 72), which includes an adjusting member (rotary knob 72), which is operable from the side wall of the child safety seat (1), is provided for the adjusting spindle (69).

28. Child safety seat according to one of the preceding claims, characterised thereby, that the actuating mechanism (23; 123) for the first lever (17) is arranged in the lateral region of the bucket seat (3), preferably in one of the arm rests of a seat bucket (5).

29. Child safety seat according to one of the preceding claims, characterised thereby, that the bucket seat (3) includes a frame structure (4), which receives the actual seat bucket (5) and at which the actuating mechanism (23; 123) is retained as well as the first lever (17) is articulated.

30. Child safety seat according to claim 29, characterised thereby, that the frame structure (4) includes a frame (24), which is in the shape of an O-ring and bent away at least twice (A, B) in its lateral regions.

31. Child safety seat according to the claims 11 and 30, characterised thereby, that the rotary axis (25) for the rollers (26, 27) is mounted at the frame (24) in the region of its first bend (A).

32. Child safety seat according to one of the claims 29 to 31, characterised thereby, that the releasable mounting (33, 34) is provided at the frame structure (4).

33. Child safety seat according to one of the preceding claims, characterised thereby, that the securing of a child in the seat bucket takes place by means of a trouser braces belt (29, 30; 45, 46).

34. Child safety seat according to claim 33, characterised thereby, that the shoulder belt tapes (29, 30) are fastened at a transverse stay (28) of the frame structure (4) and/or that the lap belt tapes (45; 46) are fastened at the rotary axle (25) of the rollers (26, 27).

35. Child safety seat according to one of the preceding claims, characterised thereby, that a further releasable mounting (41, 42) for the oblique shoulder belt (35) of the three-point safety belt is provided in the lower region.

36. Child safety seat according to one of the claims 33 to 35, characterised thereby, that the shoulder belts (29, 30) of the trouser braces belt system (29, 30; 45, 46) are fastened at the same transverse stay (28) as the oblique shoulder belt (35) of the three-point safety belt.


**Revendications**

1. Siège de sécurité pour enfants, notamment destiné à des véhicules automobiles et comprenant
a) un siège-baquet (3) et une partie de soutien (2) pour la retenue pivotante du siège-baquet (3) sur le siège d'un véhicule automobile, le siège-baquet (3) pouvant coulisser le long de la partie de soutien (2) au moyen d'un mécanisme d'actionnement (23, 123) en vue de passer d'une position assise à une position respective de repos ou d'assoupissement et inversement, et
b) un premier levier (17 ; 18) articulé à rotation sur le siège-baquet (3) et sur la partie de soutien (2), et congru de telle sorte que l'arête supérieure du siège-baquet (3) se déplace, lors de son coulissement le long de la partie de soutien (2), pour l'essentiel parallèlement à la surface du dossier du siège du véhicule automobile,
caractérisé par le fait
c) qu'un système de retenue libérable (33, 34) est prévu à la face postérieure du siège-baquet (3) au voisinage de son arête supérieure pour la sangle scapulaire oblique (35) d'une ceinture de sécurité 3 points, et
d) qu'un autre système de retenue libérable (43) est prévu sur la partie de soutien (2) pour la sangle pelvienne (39) de la ceinture de sécurité 3 points.

2. Siège de sécurité pour enfants selon la revendication 1, caractérisé par le fait que le mécanisme d'actionnement (23 ; 123) est intégré dans le siège-baquet (3).

3. Siège de sécurité pour enfants selon l'une des revendications précédentes, caractérisé par le fait que le siège-baquet (3) ou la partie de soutien (2) présente respectivement, à sa face inférieure et à sa face supérieure, au moins une surface de glissement (9 ; 10) sensiblement plane qui s'étend dans la direction du coulissement.

4. Siège de sécurité pour enfants selon l'une des revendications précédentes, caractérisé par le fait que la partie de soutien (2) arrête le siège-baquet (3) avec faculté de coulissement longitudinal.

5. Siège de sécurité pour enfants selon la revendication 4, caractérisé par le fait qu'au moins un étrier (11) s'étendant pour l'essentiel dans la direction du coulissement longitudinal est respectivement disposé à la face inférieure du siège-baquet (3) ou à la face supérieure de la partie de soutien (2), respectivement à distance de ce dernier ou de cette dernière, étrier au-dessous duquel s'engage un élément de retenue (25) respectivement fixé à la partie de soutien (2) ou au siège-baquet (3).

6. Siège de sécurité pour enfants selon l'une des revendications précédentes, caractérisé par le fait que le premier levier (17 ; 18) prévu au minimum est articulé sur la région marginale latérale de la partie de soutien (2).

7. Siège de sécurité pour enfants selon l'une des revendications précédentes, caractérisé par le fait qu'un levier respectif (17 ; 18) est implanté des deux côtés de la partie de soutien (2), leviers dont au moins l'un (17) est en liaison interactive avec le mécanisme d'actionnement (23 ; 123).

8. Siège de sécurité pour enfants selon la revendication 7, caractérisé par le fait que les leviers (17 ; 18) sont agencés symétriquement par rapport à l'axe médian longitudinal du siège-baquet (3).

9. Siège de sécurité pour enfants selon la revendication 7 ou 8, caractérisé par le fait que les deux leviers (17 ; 18) sont formés par un étrier (15) configuré en U, dont les branches libres sont articulées (21, 22) sur le siège-baquet (3), et qui est monté à pivotement (16) dans la région de la pièce solidarisant les extrémités libres.

10. Siège de sécurité pour enfants selon l'une des revendications précédentes, caractérisé par le fait que la face inférieure du siège-baquet (3) s'étend avec un coude vers le haut dans la région postérieure.

11. Siège de sécurité pour enfants selon l'une des revendications 3 à 10, caractérisé par le fait qu'au moins un rouleau (26 ; 27) est prévu à la face inférieure du siège-baquet (3) ou à la face supérieure de la partie de soutien (2), rouleau par l'intermédiaire duquel le siège-baquet (3) prend appui sur la partie de soutien (2), ce rouleau (26 ; 27) prévu au minimum étant situé avant la zone d'articulation (16) du levier (17 ; 18) sur la partie de soutien (2).

12. Siège de sécurité pour enfants selon la revendication 10 ou 11, caractérisé par le fait que le rouleau (26 ; 27) prévu au minimum est disposé à la face inférieure du siège-baquet (3) au voisinage du coude (A) de ce dernier.

13. Siège de sécurité pour enfants selon l'une des revendications 9 à 12, caractérisé par le fait qu'un rouleau respectif (26 ; 27) est prévu à la face inférieure du siège-baquet (3) aux extrémités d'un axe (25) s'étendant transversalement par rapport au plan médian du siège, ledit axe (25) s'étendant au-dessous de l'étrier (11).

14. Siège de sécurité pour enfants selon l'une des revendications précédentes, caractérisé par le fait que le premier levier (17 ; 18) est un levier à un seul bras.

15. Siège de sécurité pour enfants selon l'une des revendications précédentes, caractérisé par le fait que le mécanisme de réglage (23) comprend un second levier (52) dont l'une des extrémités est fixée au premier levier (17) de manière articulée (51), et dont l'autre extrémité (52a) est en prise avec un excentrique (55) pouvant pivoter autour d'un axe de rotation (56).

16. Siège de sécurité pour enfants selon la revendication 15, caractérisé par le fait que le point d'articulation (51) du second levier (52) sur le premier levier (17) est implanté au voisinage de la zone d'articulation (21) de ce dernier sur le siège-baquet (3), entre ce point d'articulation (21) du premier levier (17) et le point d'articulation (16) de celui-ci sur la partie de soutien (2).

17. Siège de sécurité pour enfants selon la revendication 16, caractérisé par le fait que le point d'articulation (51) du second levier (52) sur le premier levier (17) est décalé latéralement par rapport à la droite reliant les points d'articulation (16 ; 21) du premier levier (17). .

18. Siège de sécurité pour enfants selon l'une des revendications 15 à 17, caractérisé par le fait que l'extrémité (52a) du second levier (52), en prise avec l'excentrique (55), est guidée à force dans un guide longitudinal (58) s'étendant radialement par rapport au point de rotation (56) de l'excentrique (55).

19. Siège de sécurité pour enfants selon la revendication 18, caractérisé par le fait que la longueur des leviers (17 ; 52), la position du point d'articulation (51) du second levier (52) sur le premier levier (17), ainsi que le tracé (54) de l'excentrique (55), sont choisis de telle sorte que, au moins dans les deux positions extrêmes, l'axe de rotation (56) de l'excentrique (55) et les deux points d'articulation (51, 53) du second levier (52) se trouvent sur une droite.

20. Siège de sécurité pour enfants selon l'une des revendications 15 à 19, caractérisé par le fait que l'excentrique (55) est formé par un disque d'excentrique (55) percé d'une fente de guidage (54) dans laquelle est guidé un tourillon (53) qui matérialise l'un des points d'articulation du second levier (52).

21. Siège de sécurité pour enfants selon les revendications 18 et 20, caractérisé par le fait que le tourillon (53) est guidé à force dans le guide longitudinal (58).

22. Siège de sécurité pour enfants selon l'une des revendications 15 à 21, caractérisé par le fait qu'un volant ou un levier de manoeuvre (57) est relié à l'axe de rotation (56) de l'excentrique (55).

23. Siège de sécurité pour enfants selon l'une des revendications 1 à 14, caractérisé par le fait que le mécanisme de réglage (123) comprend une douille (68) installée à rotation sur le premier levier (17) et recevant, par l'intermédiaire d'un filetage interne, une région d'une broche d'ajustement (69) qui est pourvue d'un filetage externe.

24. Siège de sécurité pour enfants selon la revendication 23, caractérisé par le fait que la douille (68) est montée rotative sur le premier levier (17) autour d'un axe (67) qui s'étend perpendiculairement à son axe longitudinal, et est orientée parallèlement à l'axe d'articulation (21) du premier levier (17) sur le siège-baquet (3).

25. Siège de sécurité pour enfants selon la revendication 24, caractérisé par le fait que la douille (68) est implantée, sur le premier levier (17), entre les deux points d'articulation (16 ; 21) de ce dernier.

26. Siège de sécurité pour enfants selon l'une des revendications 23 à 25, caractérisé par le fait qu'il est prévu pour la broche d'ajustement (69) un système d'actionnement comprenant un organe de réglage (levier de manoeuvre 57) qui peut être manoeuvré à partir de la face frontale dudit siège de sécurité pour enfants.

27. Siège de sécurité pour enfants selon l'une des revendications 23 à 25, caractérisé par le fait qu'il est prévu pour la broche d'ajustement (69) un système d'actionnement (70, 71, 72) comprenant un organe de réglage (bouton rotatif 72) qui peut être manoeuvré à partir de la paroi latérale dudit siège de sécurité (1) pour enfants.

28. Siège de sécurité pour enfants selon l'une des revendications précédentes, caractérisé par le fait que le mécanisme d'actionnement (23 ; 123) destiné au premier levier (17) est disposé dans la région latérale du siège-baquet (3), de préférence dans l'un des accoudoirs d'une coquille d'assise (5).

29. Siège de sécurité pour enfants selon l'une des revendications précédentes, caractérisé par le fait que le siège-baquet (3) comprend un bâti (4) recevant la coquille d'assise (5) proprement dite, et sur lequel le mécanisme d'actionnement (23 ; 123) et le premier levier (17) sont respectivement retenu et articulé.

30. Siège de sécurité pour enfants selon la revendication 29, caractérisé par le fait que le bâti (4) comprend une carcasse (24) en forme de bague torique, qui est coudée au moins deux fois (A, B) dans ses régions latérales.

31. Siège de sécurité pour enfants selon les revendications 11 et 30, caractérisé par le fait que l'axe de rotation (25) affecté aux rouleaux (26, 27) est implanté sur la carcasse (24) dans la région de son premier coude (A).

32. Siège de sécurité pour enfants selon l'une des revendications 29 à 31, caractérisé par le fait que le système de retenue libérable (33, 34) est prévu sur le bâti (4).

33. Siège de sécurité pour enfants selon l'une des revendications précédentes, caractérisé par le fait que l'immobilisation d'un enfant dans la coquille d'assise est assurée au moyen de la sangle d'un système du type brêlage (29, 30 ; 45, 46).

34. Siège de sécurité pour enfants selon la revendication 33, caractérisé par le fait que les lanières (29, 30) de la sangle scapulaire sont fixées à une entretoise (28) du bâti (4) , et/ou par le fait que les lanières (45, 46) de la sangle pelvienne sont fixées à l'axe de rotation (25) des rouleaux (26, 27).

35. Siège de sécurité pour enfants selon l'une des revendications précédentes, caractérisé par le fait qu'un autre système de retenue libérable (41, 42) est prévu dans la région inférieure pour la sangle scapulaire oblique (35) de la ceinture de sécurité 3 points.

36. Siège de sécurité pour enfants selon l'une des revendications 33 à 35, caractérisé par le fait que les lanières (29, 30) de la sangle scapulaire du système de type brêlage (29, 30 ; 45, 46) sont fixées à la même entretoise (28) que la lanière de la sangle scapulaire oblique (35) de la ceinture de sécurité 3 points.

**Fig. 1**

**Fig. 2**

**Fig. 3**

Fig. 4.

Fig. 5

Fig. 6

_Fig. 7_

_Fig. 8_

Fig. 9

Fig.10

Fig.11